# EUROPEAN PATENT APPLICATION

(11) **EP 3 009 011 A2**
(43) Date of publication of application: **20.04.2016**
(21) Application number: 15190304.4
(22) Date of filing: 16.10.2015
(51) Int. Cl.: A23L 29/281, A23L 9/10, A23L 33/17, A23L 13/40, A23L 23/00, A23L 21/10

(54) **HOMOGENISED PRODUCT FOR PARTICULAR NUTRITIONAL USES**

(30) Priority: 16.10.2014 US 201462064579 P
(71) Applicant: Szostak, Boguslaw Krzysztof, 30-717 Krakow (PL); Polomsky, Jozef, 08001 Presov (SK)
(72) Inventor: Szostak, Boguslaw Krzysztof, 30-717 Krakow (PL); Polomsky, Jozef, 08001 Presov (SK)
(74) Representative: Harris, David James

(57) **Abstract**

The subject of the invention is a homogenised product for particular nutritional uses wherein protein present in this product comes from chicken egg albumin with an addition of a small amount of protein hydrolysates with a high degree of hydrolysis in the form of collagen hydrolysate. The product is addressed to people who are on a special health diet, especially lactose- and glucose-free as well as on a sports diet. Depending on the kind of additives and functional substances that are added to it, the product may have the form of a thick, semi-liquid sauce, pudding, cheese alternative dessert, or semi-liquid substance that may be used to produce formed cold meat alternatives.

## Description

### CLAIM OF PRIORITY

This application claims priority to United States Provisional Patent Application No.: 62/064579 filed on October 16 2014, entitled "Egg Product and Method of Production", the contents of which are hereby incorporated by reference.

### FIELD OF THE INVENTION

The field of the invention relates to homogenized dietary compositions produced from ovalbumin. In particular, to a low-calorie food and its method of preparation.

### BACKGROUND OF THE INVENTION

One of the most significant problems with modem society in the United States as well as the more developed countries in Europe is the rising level of obesity amongst the public. Obesity can be defined a number of ways but a recent study co-opted by the Centre for Disease Control and Prevention ("CDC") and the United States Public Health Service defined obesity in children as having a body mass index ("BMI") in the 95th percentile or above, and in adults as having a BMI of 30 or greater. According to a second study by the CDC, more than one-third of adults in the United States are obese. There are many health problems that can arise from obesity. These conditions include type-2 diabetes, stroke, heart disease, gallstones, breathing problems, and certain cancers. Further, in 2008, the estimated annual medical cost of obesity in the United States was $147,000,000,000.

While obesity is caused somewhat by a person's genes, it is also largely influenced by that person's diet, amount of physical activity, metabolism, and a number of other factors. Put simply, Americans and Europeans in developed countries are consuming more calories than they are burning, and that is causing an epidemic of obesity. Further, this problem is exacerbated by the fact that the calories that are being consumed are from an excess of carbohydrates and fat. The subject of the invention is a homogenised product for particular nutritional uses wherein protein present in this product comes from chicken egg albumin with an addition of a small amount of protein hydrolysates with a high degree of hydrolysis in the form of collagen hydrolysate. Depending on the kind of additives and functional substances that are added to it, the product may have the form of a thick, semi-liquid sauce, cheese alternative dessert, pudding, or a semi-liquid form used to produce formed cold meat alternatives.

Review of related technology:
Patent application No.: US 62064579 is known. It describes an egg product and the method of producing it. The described product is a low-calorie, high-protein product for particular nutritional uses with flavour resembling mozzarella-type cheese, obtained through a multi-stage process using heat treating and traditional media.
Patent specification No.: PL 211456 B1 describes a cheese alternative composition and the method of its production, wherein the composition consisting of water, acidifying agent, colloidal water, protein, cheese derivative and flavour seasoning in the form of cheese imitation is produced by mixing the aforementioned ingredients and adding such an amount of acidifying agent as would allow the composition to be thick enough to be sliced, cut, chopped or ground.
Patent specification No.: PL 344229 A1 describes a cheese bar and the method of its production, wherein a bar made from the mass consisting of pressed cheese, sweetening substance, fat, butter, enriching and filing material as well as flavours is obtained through the process of mixing ingredients in a mixing bowl until they are a homogeneous mass and then pressing it to form bars.
Patent specification No.: PL 378607 A1 describes the method of producing a cheese alternative foodstuff from soya, wherein soya bean is processed into the product in a pressurised steam blender, where the content is heated up to 105-130 °C with a working pressure of 0.4-0.5 bar.
Patent document No.: CN 000102094057 A describes the method of producing polypeptide from chicken egg albumin. This method combines microwave technology with enzymatic fermentation biotechnology. The product tastes and looks good and the process of its production lasts shorter in comparison with traditional technology and involves less cost. Nutritional value of the product is related to the reduction of particle weight of protein compounds.
Patent document No.: EP 1 452 098 A1 describes egg alternative concentrate and liquid egg alternative, low in cholesterol. It contains between 40% and 85% w/w of protein, between 10% and 50% w/w of vegetable oil and between 0.5% and 15% w/w of carbohydrates. Cholesterol content is lower than 0.5%. The protein includes soya protein, cow milk protein and possibly chicken egg albumin. The concentrate is dispersed in water, with a possible addition of chicken egg albumin to produce a liquid egg alternative. Liquid egg alternative between 75% and 84% of water, between 16% and 28% of liquid egg alternative and possibly chicken egg albumin.
Patent document No.: EP 1 576 886 B1 describes the method of producing Mozzarella type cheese string product and Mozzarella type string product. Mozzarella type string product has sufficiently good taste and texture, to be apt for direct consumption by customers.
Patent document No.: GB 1498395 A describes meat analogue and the method of its production from soya flour, peanut flour and cotton seeds, wheat flour, powder milk and functional additives. The mixture is subject to heating with microwaves and pressure increase achieved through decreasing its volume in a screw device.
Patent document No.: JP 002000210033 A describes processed food and the method of its production consisting of placing liquid egg components, soya milk or eggs in pressurised sheet containers and exposing them to microwave radiation.
Patent document No.: JP 000H02142451 A describes the method of processing liquid egg material by means of microwave radiation in a pipe device aimed at inactivating microorganisms included therein.
Patent document No.: NL 1019816 C1 describes the method of processing a meat substitute, where the protein, the hydrocolloid, is precipitated with the use of metal cations and then heated up until homogeneous mixture is obtained.
Patent document No.: US 6,905,721 B2 describes a cheese alternative composition used in the process of producing cheese balls, slices and the like, as well as the method of producing such compositions. Composition consisting of water, in the favourable amount of at least 60 w/w, colloidal water, cheese derivative in the amount smaller than 15% w/w, protein in the amount of 1% of the mixture maximum, cheese seasoning and acidifying agents is thick enough to be at least sliced, cut, chopped or ground. It has such taste, texture and consistency as could previously be obtained only in the process of cheese product pasteurisation.

Various devices are known in the art. However, their structure and means of operation are substantially different from the present invention. Such devices fail to provide a low calorie food that is natural. At least one embodiment of this invention is presented in the drawings below, and will be described in more detail herein.

### SUMMARY OF THE PREFERRED EMBODIMENTS

The current disclosure teaches a dietary composition created from the albumen of an egg, commonly known as the "white" of an egg and its method of preparation. The method of preparing this dietary composition is comprised of isolating an egg albumen, adding at least one flavoring agent, partially homogenizing the egg albumen and at least one flavoring agent, enriching the homogenized product with a gas, wherein said gas is preferably air, treating the gasified, homogenized product such that coagulation occurs, winding the coagulated product onto a spool, optionally adjusting the spooled product to a desired shape and weight, treating the product with heat, cooling the product.

The product of the invention can be finely sliced to act as a low-calorie cheese. Preferably, the present invention will have a nutritional value ranging from 20 to 180 kcal/100g. The product can also be shaped to appear like a cut of meat, allowing the product to serve as a replacement or supplement to dishes traditionally prepared with meat. In a preferred embodiment the product is used to replace the meat of a turkey.

The present invention provides for a homogenised product comprising: at least one egg albumen; at least one flavoring agent; at least one protein hydrolysates. Preferably the product is 10% protein maximum of the product's mass weight. Sometimes the protein hydrolysate is a protein hydrolysate in the form of collagen hydrolysate. In some embodiments said at least one flavoring agent results in the product having the flavour of cream cheese or pudding, vanilla flavoured homogenised cream cheese or pudding, raspberry flavoured homogenised cream cheese or pudding, forest fruit flavoured homogenised cream cheese or pudding, coffee flavoured homogenised cream cheese or pudding, or chocolate flavoured homogenised cream cheese or pudding.

In other embodiments, the present invention is a thick semi-liquid food sauce. Sometimes it is a semi-liquid garlic sauce, semi-liquid herb sauce, semi-liquid pepper sauce, semi-liquid tomato-pepper sauce, and wherein said flavoring agent is vegetable flavoured or a semi-liquid sauce that may be used for producing formed cold meat alternatives. In some embodiments the protein hydrolysate is a protein hydrolysate in the form of collagen hydro lysate.

Further, the product of the invention also has potential use as a tool to help regulate the blood sugar of diabetics. For example, the product of the invention can be used in producing various kinds of foods for diabetics, such as vegetable and pasta salads, different kinds of pies, ham, sausages, hamburgers, and other products. When being used to replace the aforementioned foods, the amount of sugar in the product of the invention can be regulated to fit a given user's needs. The product of the invention can also be used to supplement to replace sweet desserts by using flavoring agents or aromatic compounds that provide for a sweet taste or aroma.

It is an object of this invention to provide a method of preparing a dietary composition, comprising: isolating an egg albumen, adding at least one flavoring agent, partially homogenizing the egg albumen and the at least one flavoring agent, enriching the homogenized product with a gas, treating the gasified, homogenized product such that coagulation occurs, winding the coagulated product onto a spool, optionally adjusting the spooled product to a desired shape and weight, treating the product with heat, cooling the product.

It is an object of this invention to provide a low-calorie food, comprising: egg albumen, at least one flavoring agent, wherein said flavoring agent is partially homogenized with the egg albumen, wherein said homogenized mixture is enriched with gas, heat treated, and then cooled.

### BRIEF DESCRIPTION OF THE DRAWINGS

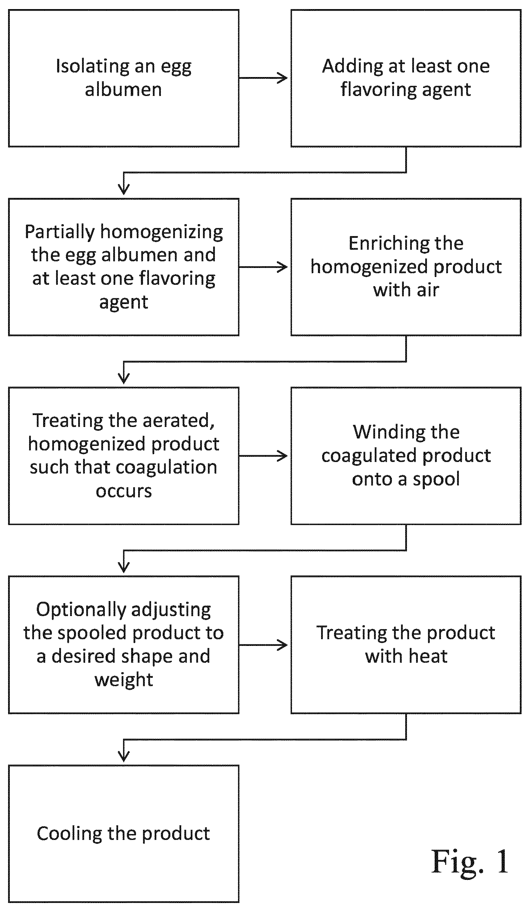

**Fig. 1** shows an illustration of an embodiment of the method of the present invention.

### DETAILED DESCRIPTION OF THE PREFERRED EMBODIMENTS

The preferred embodiments of the present invention will now be described with reference to the drawings. Identical elements in the various figures are identified with the same reference numerals.

Reference will now be made in detail to each embodiment of the present invention. Such embodiments are provided by way of explanation of the present invention, which is not intended to be limited thereto. In fact, those of ordinary skill in the art may appreciate upon reading the present specification and viewing the present drawings that various modifications and variations can be made thereto.

Referring to Fig. 1, one embodiment of a method of preparing this dietary composition is shown in a flow chart. The chart shows the process of isolating an egg albumen, adding at least one flavoring agent, partially homogenizing the egg albumen and at least one flavoring agent, enriching the homogenized product with a gas, wherein said gas is preferably air, treating the gasified, homogenized product such that coagulation occurs, winding the coagulated product onto a spool, optionally adjusting the spooled product to a desired shape and weight, treating the product with heat, cooling the product. As noted above, chicken egg is preferably used for this process, but the eggs of other birds, such as ostriches and ducks, may be used either alone, or in combination with a chicken egg. The flavouring agent of the present invention is homogenised (mixed) with the at least one flavouring agent for a period of 1 to 10 minutes, and the flavouring agent comprises 5%-25% of the homogenized mixture, by weight. The gas used here is preferably pressurized air. That said, this gas may also be air in a mixture with elevated oxygen and/or elevated nitrogen. Alternatively, this gas can be mixed with another inert gas such as Argon or Neon, or may be some other component of the earth's ambient atmosphere. Preferably the homogenised product is allowed to coagulate for a period of 5 minutes, but it is acceptable for this to occur over a period ranging from 5 second to 1 hour. While the size of the spooled product is dependent on how much of the starting materials are used, but preferably, this process is performed on batches ranging from 50g to 20kg of final product. The spool results in a wound product having a band or rolled shape, similar to a polyhedron or cylinder. The final product may be cooled by any commercially viable means.

Foodstuffs known from the prior art constitutes a wide range of products in relation to such traditional products like cold meat, flavoured homogenised cream cheese and other. They are an alternative for people with specific taste or being on a diet, especially milk-free and high-protein diet. However, the protein is of different origins and thus, the products may cause an allergic reaction. As noted above, the present invention can have variable sugar content. Preferably, the product will be 0.01 % to 10% sucrose, glucose, or other sugar derviative. Further, the glycaemic index of the final product does not exceed IG 60.

The essence of the invention is a homogenised product including only chicken egg albumin and protein hydrolysates with a high degree of hydrolysis in the form of collagen hydrolysate. While the egg white of a chicken is the preferred starting material, it is also possible to use the albumin of other species of birds, either alone, or in some combination with the egg white of a chicken. Depending on the kind of additives and functional substances that are added to this, the product may have the form of a thick, semi-liquid sauce, pudding, cheese alternative dessert, or another semi-liquid substance that may be used to produce formed cold meat alternatives. While the thickness of this product is variable, it will preferably range from 1mm thick, up to 200mm thick. The product's dietary properties are determined by the ingredients and chicken egg albumin's properties.

According to WHO, the protein included in the product has a "so-called" optimum amino acid profile for human body and almost 40% content of essential amino acids such as phenylalanine, isoleucine, leucine, methionine, threonine, tryptophan, and valine. Organoleptic properties and tastes of different forms of the product resemble traditional homogenised cream cheeses, puddings, sauces or fine ground cold meat, which is attractive for those consumers who remain on a monotonous health or sports diet. Due to its specific and limited allergenic effect on people allergic to chicken egg albumin, the product may be consumed without restrictions by people suffering from other food allergies. That is, allergic reactions from the egg white of a chicken applies to a very small percentage of the population. However, the instant invention only contains the hydrolysates only, the sect of the public that will be affected is further narrowed.

The product's properties make it ideal for two groups of consumers: people with medical disorders - suffering from coeliac disease, sensitive to gluten, lactose-intolerant or suffering from irritable bowel syndrome, arthritis and radiation sickness; and people being on the so-called sports diet resulting from nutritional needs of the organism caused by an above-average physical activity. However, the present invention is also suitable for consumption by ordinary consumers without any particular dietary restriction.

### Examples of the invention's implementation:

### Example 1

### Vanilla flavoured dessert.

The product is similar to a traditional vanilla flavoured homogenised cheese or pudding as far as organoleptic properties and tastefulness are concerned. The product includes: 5.9 % of fat, 3.2 % of carbohydrates and 13.7 % of protein - 95 % of which comes from chicken egg albumin. The flavouring is vanilla cane.

Acceptable ranges to make products analogous to this example include:
Fat: 0.5%-10%
Carbohydrates: 0.5%-10%
Protein: 90%-99.9%

### Example 2

### Garlic flavoured sauce.

The product is similar to traditional garlic flavoured sauce produced by Heinz as far as organoleptic properties and tastefulness are concerned. The product includes: 5.9 % of fat, 3.2 % of carbohydrates and 7.0 % of protein - 90 % of which comes from chicken egg albumin. The flavouring is dried garlic.

Acceptable ranges to make products analogous to this example include:
Fat: 0.5%-10%
Carbohydrates: 0.5%-10%
Protein: 90%-99.9%

### Example 3

Frankfurter (pol. parówka) - a cold meat alternative.

The product is very much similar to a fine ground cold meat product, commonly referred to as "parówka" as far as organoleptic properties and tastefulness are concerned. The product includes: 5.9 % of fat, 3.2 % of carbohydrates and 10.0 % of protein - 95 % of which comes from chicken egg albumin. The flavourings are natural aromas.

Acceptable ranges to make products analogous to this example include:
Fat: 0.5%-10%
Carbohydrates: 0.5%-10%
Protein: 90%-99.9%

According to the present disclosure, the products are manufactured with the use of commonly available technologies.

When introducing elements of the present disclosure or the embodiment(s) thereof, the articles "a," "an," and "the" are intended to mean that there are one or more of the elements. Similarly, the adjective "another," when used to introduce an element, is intended to mean one or more elements. The terms "including" and "having" are intended to be inclusive such that there may be additional elements other than the listed elements.

While the disclosure refers to exemplary embodiments, it will be understood by those skilled in the art that various changes may be made and equivalents may be substituted for elements thereof without departing from the scope of the disclosure. In addition, many modifications will be appreciated by those skilled in the art to adapt a particular instrument, situation or material to the teachings of the disclosure without departing from the spirit thereof. Therefore, it is intended that the disclosure not be limited to the particular embodiments disclosed.

## Claims

1. Homogenised product comprising:
at least one egg albumen;
at least one flavoring agent;
at least one protein hydrolsyates.

2. The homogenized product of claim 1, wherein the protein hydrolysate constitutes 10% maximum of the product's mass weight.

3. The homogenized product of claim 1, wherein the protein hydrolysate is a protein hydrolysate in the form of collagen hydrolysate.

4. The homogenized product of claim 1, wherein said at least one flavoring agent results in the product having the flavour of cream cheese or pudding.

5. The homogenized product of claim 4, wherein said at least one flavoring agent results in the product having the flavour of vanilla flavoured homogenised cream cheese or pudding.

6. The homogenized product of claim 4, wherein said at least one flavoring agent results in the product having the flavour of raspberry or forest fruit flavoured homogenised cream cheese or pudding.

7. The homogenized product of claim 4, wherein the use of coffee extract flavouring, its form is similar to that of coffee flavoured homogenised cream cheese or pudding.

8. The homogenized product of claim 4, wherein said at least one flavoring agent results in the product having the flavour of chocolate flavoured homogenised cream cheese or pudding.

9. The homogenized product of claim 1, wherein said product is is a thick semi-liquid food sauce.

10. The homogenized product of claim 9, wherein said product has one of a: a semi-liquid garlic sauce, a semi-liquid herb sauce, a semi-liquid pepper sauce, and a semi-liquid tomato-pepper sauce, and wherein said flavouring agent is vegetable flavoured .

11. The homogenized product of claim 1, wherein the use of additional ingredients, like meat and properly chosen aromas and known technologies, its form is a thick semi-liquid sauce that may be used for producing formed cold meat alternatives.

12. The homogenized product of claim 2, wherein the protein hydrolysate is a protein hydrolysate in the form of collagen hydrolysate.

13. A method of preparing a dietary composition, comprising:
isolating an egg albumen,
adding at least one flavoring agent,
partially homogenizing the egg albumen and the at least one flavoring agent,
enriching the homogenized product with a gas,
treating the gasified, homogenized product such that coagulation occurs,
winding the coagulated product onto a spool,
optionally adjusting the spooled product to a desired shape and weight,
treating the product with heat,
cooling the product.

14. A method of preparing a dietary composition, comprising:
isolating an egg albumen from a whole hen egg,
adding at least one aromatic substance to the albumen,
partially homogenizing the aromatic substances with the albumen to create a mixture,
enriching the mixture with oxygen,
cooking the mixture such that the albumen coagulates,
winding the coagulated mixture onto a spool,
optionally adjusting the spooled mixture to a desired shape and weight,
treating the mixture with heat,
cooling the mixture to around 4°C.

15. A low-calorie food, comprising:
egg albumen,
at least one flavoring agent,
wherein said flavoring agent is partially homogenized with the egg albumen,
wherein said homogenized mixture is enriched with gas, heat treated, and then cooled.

16. A low-calorie food, comprising:
hen egg albumen,
at least one aromatic compound,
wherein said at least one aromatic compound is partially homogenized with the egg albumen,
wherein said homogenized mixture is enriched with oxygen, heat treated, and then cooled.
